Europäisches Patentamt

European Patent Office

Office européen des brevets

(11) Veröffentlichungsnummer: **0 310 105**
**A2**

(12) **EUROPÄISCHE PATENTANMELDUNG**

(21) Anmeldenummer: 88116166.5

(22) Anmeldetag: 30.09.88

(51) Int. Cl.⁴: **G05D 16/06**

(30) Priorität: 02.10.87 DE 3733315

(43) Veröffentlichungstag der Anmeldung:
05.04.89 Patentblatt 89/14

(84) Benannte Vertragsstaaten:
CH DE FR GB IT LI NL SE

(71) Anmelder: **MESSER GRIESHEIM GMBH**
**Hanauer Landstrasse 330**
**D-6000 Frankfurt/Main 1(DE)**

(72) Erfinder: **Linz, Dieter**
**An der Trinkhalle 11**
**D-6232 Bad Soden(DE)**

(54) Druckregler für Gase, insbesondere für Gase höchster Reinheit.

(57) Zur Vermeidung von Partikeln und Feuchtigkeit
in den prozeßgasführenden Räumen (14, 15) eines
Druckreglers (19) wird eine Feder (6) im prozeßgasfreien Raum (23) angeordnet, die erfindungsgemäß
über ein an der Niederdruckmembran (11) befestigtes Stellglied (24) auf die Niederdruckmembran wirkt
(Fig.1).

FIG.1

EP 0 310 105 A2

## Druckregler für Gase, insbesondere für Gase höchster Reinheit

Die Erfindung betrifft einen Druckregler für Gase, insbesondere für Gase höchster Reinheit, mit einem im Druckreglergehäuse angeordneten prozeßgasführenden Hochdruck- und einem Niederdruckraum, welche über ein ansteuerbares, aus einem Ventilkörper und einem Ventilsitz bestehenden Ventil miteinander verbindbar sind, mit einer im prozeßgasfreien Raum, vorzugsweise in einem Federgehäuse, angeordneten Stellfeder, die auf eine den Ventilkörper steuernde und den Niederdruckraum begrenzende Niederdruckmembran wirkt und einer den Ventilkörper gegen den Ventilsitz stellenden Schließfeder.

Bei Druckreglern, die beispielsweise zur Prozeßgasversorgung für die Halbleitertechnik, bei der Emissionsschutzmessung oder der Eichgasversorgung zur Schadstoffmessung eingesetzt werden, wird ein Höchstanspruch in Bezug auf den Reinheitsgrad von Gasen gestellt. Dabei soll die Qualität des Gases in Bezug auf seine Reinheit möglichst unverändert aus einem Transportbehälter (Flasche) zu einem Verbraucher geleitet werden. Um Verunreinigungskomponenten, wie Partikel und Feuchtigkeit, zu verringern, werden Druckregler mit möglich wenig vom Reinstgas berührten Einzelteilen benötigt.

Gattungsgemäße Druckregler benötigen zur korrekten Druckregelung eine Schließfeder zur Abdichtung des Ventilkegels auf dem Ventilsitz. Diese ist bei einer bekannten Ausführungsform eines Druckreglers über dem Ventilkegel im prozeßgasführenden Hochdruckraum angeordnet und stellt mit einer relativ großen Oberfläche ein Partikeldepot dar.

Aus dem deutschen Gebrauchsmuster 8703291 ist ein Druckregler bekannt, bei dem der prozeßgasführende Hochdruckraum unterhalb des Ventilkegels mit einer Hochdruckmembran abgedichtet und im prozeßgasfreien Raum zwischen dieser Hochdruckmembran und der Stirnseite eines Stopfens die Schließfeder angeordnet ist. Durch diese Maßnahme wird zwar eine Verunreinigung des Reinstgases durch die Schließfeder vermieden; nachteilig ist jedoch, daß der Hochdruckraum mittels einer zusätzlichen Hochdruckmembran abgedichtet werden muß. Hierbei wird über den im Hochdruckbereich erforderlichen Dichtspalt einerseits die Partikelbildung in dem prozeßgasführenden Hochdruckraum des Druckreglergehäuses gefördert; andererseits stellt die zusätzliche Hochdruckmembranspannung eine Kraft dar, die die Federrate und damit den inneren Widerstand des Druckreglers erhöht und somit die Druckregelung negativ beeinflußt.

Der Erfindung liegt die Aufgabe zugrunde, die Anzahl der Membranen bei außerhalb der prozeßgasführenden Räume angeordneten Federn zu verringern und insbesondere eine Membran auf der Hochdruckseite des Druckreglers zu vermeiden.

Diese Aufgabe wird erfindungsgemäß dadurch gelöst, daß im prozeßgasfreien Raum an der Niederdruckmembran mindestens ein Stellglied befestigt ist, welches mit einer Feder in Wirkverbindung steht.

Die Erfindung ermöglicht es, über die an sich bekannte Niederdruckmembran den prozeßgasführenden Niederdruckraum abzudichten und gleichzeitig über das mit der Niederdruckmembran verbundene Stellglied und die außerhalb des prozeßgasführenden Niederdruckraumes mit dem Stellglied in Wirkverbindung stehende Feder (Druckfeder) entweder den Ventilkörper auf den Ventilsitz zu ziehen, oder bei einem im Unterdruckbereich arbeitenden Druckregler die Niederdruckmembran entgegengesetzt zur Arbeitsrichtung vorzuspannen. Durch die koaxiale Anordnung der Feder zu der Stellfeder in einem Federgehäuse wird eine kompakte Ausbildung des Druckreglers erreicht. Dies ist insbesondere beim Einsatz in Schränken vorteilhaft, wie sie bei Anlagen zur Schadstoffmessung verwendet werden. Nach einem Ausführungsbeispiel ist das Stellglied durch eine Öffnung in der Niederdruckmembran geführt und über zwei an beiden Seiten der Niederdruckmembran anliegende metallische Dichtringe mit dieser gasdicht verbunden.

Dabei besteht das Stellglied aus einem im prozeßgasfreien Raum angeordneten Stellteil, der als Mutter oder Schraube ausgebildet ist und einem im prozeßgasführenden Niederdruckraum angeordneten Befestigungselement, welches als Gegenstück (Mutter oder Schraube) ausgebildet ist.

Nach einem weiteren Ausführungsbeispiel ist das im prozeßgasführenden Niederdruckraum angeordnete Befestigungselement und das im prozeßgasfreien Raum angeordnete Stellteil des Stellgliedes über eine Schweißverbindung, insbesondere Punktschweißverbindung, mit der metallischen Niederdruckmembran verbunden.

Vorteilhaft wird das im prozeßgasfreien Raum angeordnete Stellteil des Stellgliedes in Stellrichtung, d. h. in möglicher Bewegungsrichtung der metallischen Niederdruckmembran frei beweglich durch eine Öffnung einer vorzugsweise an dem Federgehäuse fest angeordneten Scheibe geführt. Die der Niederdruckmembran abgewandte Seite der Scheibe dient als Anlagefläche für das eine Ende der Feder, deren anderes Ende an einer am Stellteil angeordneten Schulter eines Anlageelements anliegt. Vorzugsweise über eine Gewindeverbindung zwischen Anlageelement und Stellteil kann der Abstand und damit vorteilhaft der Federweg zwischen der Scheibe und dem Anlageelement eingestellt werden. In ihrem äußeren Bereich weist die Scheibe zwei weitere Öffnungen auf, durch die zwei Arme einer zwischen der Scheibe und der Niederdruckmembran angeordneten Membranplatte greifen. Auf den Armen ist eine Ringscheibe befestigt, die das Stellteil umgibt und als Auflageelement für die Stellfeder dient. Das andere Ende der Stellfeder liegt an einem Druckstück eines von außen verstellbaren Einstellelements an. In einer Ausführungsform ist das Befestigungselement mit dem Ventilkörper kraftschlüssig verbunden, wobei die Feder als Schließfeder ausgebildet ist und den Ventilkörper auf den Ventilsitz zieht. Nach einer weiteren vorteilhaften Ausführungsform ist der Niederdruckraum an eine einen Unterdruck erzeugende Anlage angeschlossen, wobei mit der Feder die Niederdruckmembran entgegengesetzt zur Arbeitsrichtung der Prozeßgase spannbar ist. Hierbei ist das Befestigungselement nicht mit dem Ventilkörper verbunden. Über eine auf den Ventilkörper wirkende Druckfeder wird dieser auf den Ventilsitz gedrückt.

Weitere vorteilhafte Ausführungsbeispiele sind in den Unteransprüchen angegeben.

Ausführungsbeispiele der Erfindung sind in den Zeichnungen dargestellt und werden im folgenden näher beschrieben.

Es zeigen:

Fig. 1 eine schematische Schnittdarstellung des Druckreglers nach der Erfindung;

Fig. 2 eine schematische Teilschnittdarstellung eines Druckreglers für den Einsatz im Unterdruckbereich;

Fig. 3 eine unlösbare Verbindung des Stellgliedes mit der Niederdruckmembran.

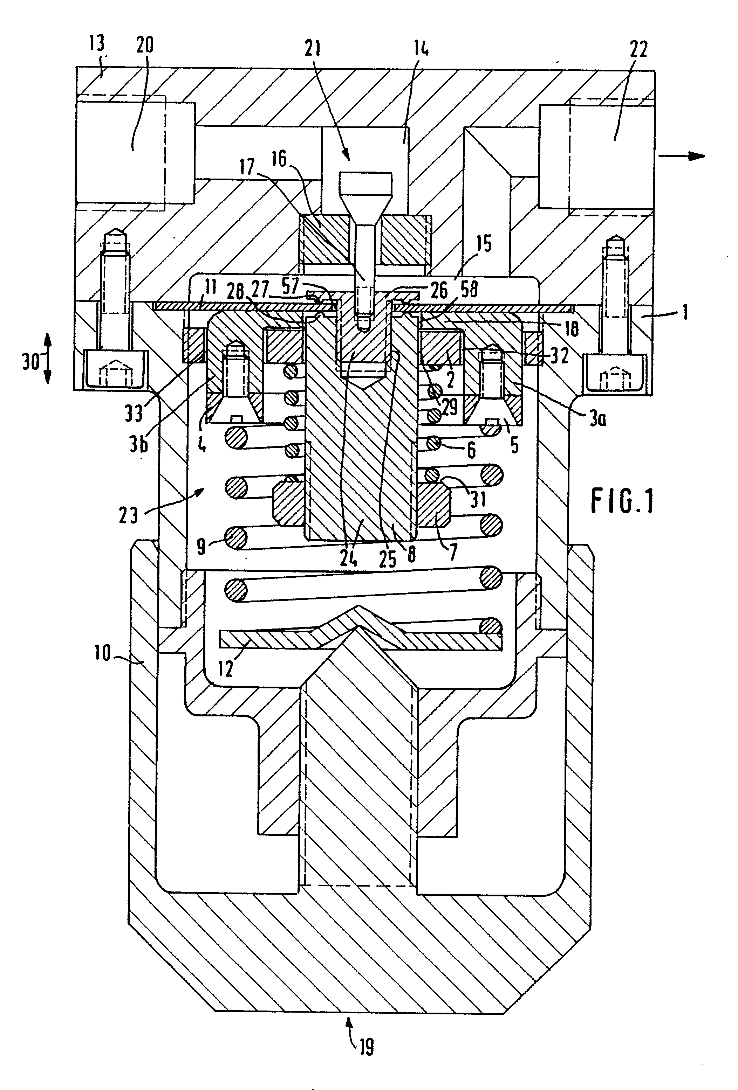

In der Fig. 1 ist eine schematische Schnittdarstellung des Druckreglers 19 nach der Erfindung dargestellt. Der Druckregler besteht im wesentlichen aus einem Druckreglergehäuse 13, in welchem ein prozeßgasführender Hochdruckraum 14 und ein prozeßgasführender Niederdruckraum 15 angeordnet sind. Der Hochdruckraum 14 ist eingangsseitig über eine Hochdruckleitung 20 mit einer nicht näher dargestellten Gasversorgung und über ein ansteuerbares Ventil 21 mit dem Niederdruckraum 15 verbunden, an dessen Niederdruckleitung 22 ausgangsseitig eine Anlage angeschlossen ist. Der Niederdruckraum 15 wird durch das Druckreglergehäuse 13 und die Niederdruckmembran 11 begrenzt, die stirnseitig zwischen dem Druckreglergehäuse 13 und einem Federgehäuse 1 eingespannt ist. Die zwischen Druckreglergehäuse 13 und Federgehäuse 1 vorgesehenen Dichtungen sind in der Fig. 1 nicht näher dargestellt. An der Niederdruckmembran 11 ist ein den Niederdruckraum 15 und den prozeßgasfreien Raum 23 gasdicht verbindendes Stellglied 24 angeordnet, dessen im prozeßgasfreien Raum 23 angeordnetes Stellteil 8 mit einer Feder 6 in Wirkverbindung steht. Nach einem Ausführungsbeispiel ist das Stellglied 24 zweiteilig ausgebildet, wobei das im prozeßgasfreien Raum angeordnete Stellteil 8 eine Gewindebohrung 25 aufweist, in die ein schraubenförmig ausgebildetes Befestigungselement 26 vom prozeßgasführenden Niederdruckraum durch die Niederdruckmembran 11 einschraubbar ist. Über zwei der Niederdruckmembran 11 zugewandte und gegenüberliegende metallische Dichtringe 27,28 des Stellglieds 24 wird der Niederdruckraum 15 nach der Befestigung des Stellglieds 24 an der Niederdruckmembran 11 gasdicht an der Durchführungsöffnung 57 abgedichtet.

In dem Federgehäuse 1 ist in einem Abstand zur Niederdruckmembran 11 eine Scheibe 2 über eine Gewindeverbindung fest angeordnet, die eine Öffnung 29 aufweist, durch die das Stellteil 8 in Stellrichtung (Pfeilrichtung 30) der Niederdruckmembran 11 frei beweglich hindurchgeführt ist. Auf der Scheibe 2 liegt das eine Ende der als Druckfeder ausgebildeten Feder 6 an, deren anderes Ende an einer Schulter 31 eines am Stellteil 8 im Abstand zur Scheibe 2 angeordneten Anlageelements 7 anliegt. Vorteilhaft ist das Anlageelement 7 über eine Gewindeverbindung mit dem Stellteil 8 verbunden, so daß der Abstand zwischen der Scheibe 2 und dem Anlageelement 7 veränderbar ist und damit der Federweg der Feder 6 einstellbar ist.

Zwischen der Scheibe 2 und der Niederdruckmembran 11 ist eine Membranplatte 18 angeordnet. Die Membranplatte 18 weist zwei zu ihrer an der Niederdruckmembran 11 anliegenden Fläche im wesentlichen senkrecht abstehende Arme 3a, 3b auf, die durch zwei Öffnungen 32, 33 in der Scheibe 2 greifen. Auf der Stirnseite dieser zwei Arme 3a, 3b ist eine Ringscheibe 4 mit beispielsweise Schrauben 5 befestigt, auf der das eine Ende der Stellfeder 9 anliegt, deren anderes Ende an einem Druckstück 12 eines Einstellelementes 10 anliegt. In der Mitte der Membranplatte 18 ist eine Öffnung 58 für die Durchführung des Stellteils 8 angeordnet.

Das zwischen dem Hochdruckraum 14 und dem Niederdruckraum 15 angeordnete Ventil 21 besteht aus einem Ventilsitz 16 und einem Ventilkörper 17, der über die Niederdruckmembran 11 ansteuerbar ist. Gemäß dem Ausführungsbeispiel nach Fig. 1 ist der Ventilkörper 17 mit dem Befestigungselement 26 über beispielsweise eine Schraubverbindung kraftschlüssig verbunden. Über die Feder 6, deren Federkraft auf die Schulter 31 des Anlageelements 7 wirkt, wird der Ventilkörper 17 gegen den Ventilsitz 16 gezogen. Die hierbei als Schließfeder ausgebildete Feder 6 ist vorteilhaft eine Druckfeder. Die Feder 6 und die Stellfeder 9 sind koaxial zueinander in nur einem Federgehäuse 1 angeordnet, wobei die Feder 6 von der Stellfeder umgeben ist.

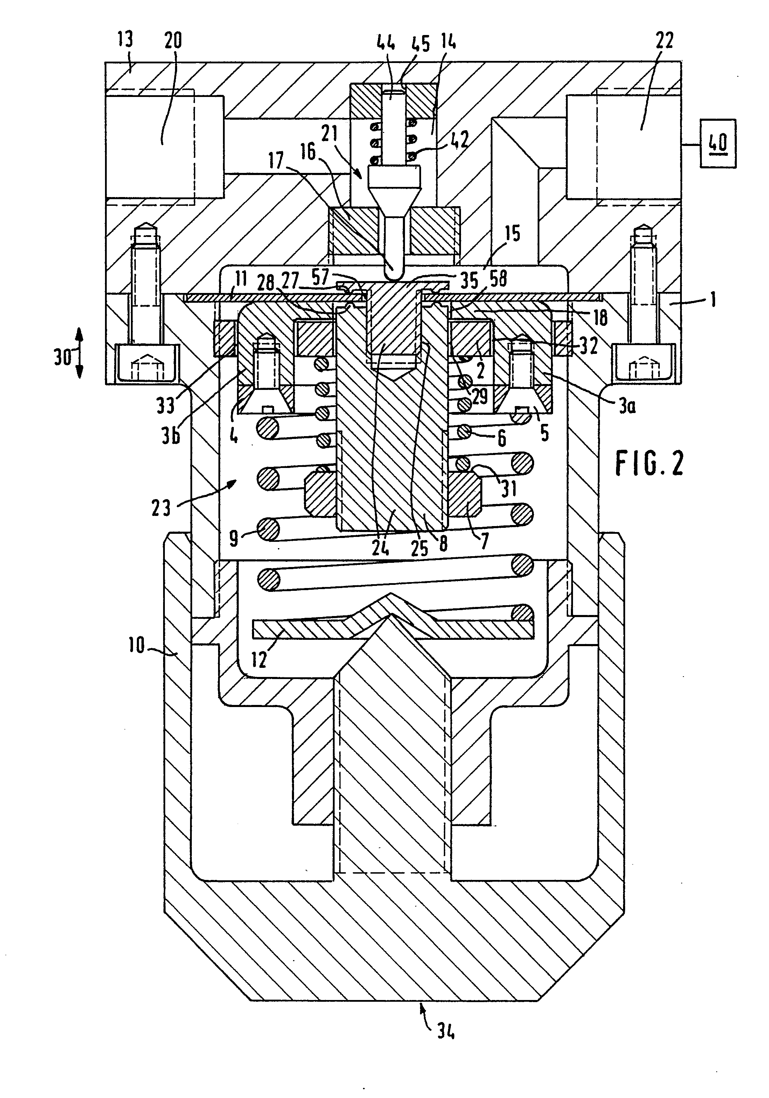

In der Fig. 2 ist ein Druckregler dargestellt, der im Unterdruckbereich eingesetzt werden kann. Unterschiedlich zu dem in Fig. 1 dargestellten und beschriebenen Druckregler 19 ist bei dem Druckregler 34 der Fig. 2 das aus Stellteil 8 und Befestigungselement 35 bestehende Stellglied 24 nicht mit dem Ventilkörper 17 verbunden. Über die Feder 6 kann die Niederdruckmembran 11 entgegen der Arbeitsrichtung einer an die Niederdruckleitung 22 angeschlossenen und im Unterdruckbereich arbeitenden Anlage 40 vorgespannt werden. Oberhalb des Ventilkörpers 17 ist im Hochdruckraum 14 eine auf den Ventilkörper 17 drückende Schließfeder 42 angeordnet, die den Ventilkörper 17 auf den Ventilsitz 16 drückt. Gemäß einer vorteilhaften Ausführungsform ist der Ventilkörper 17 über einen oberhalb des Ventilsitzes 16 angeordneten Ventilstift 44 in Führungen 45 geführt. Vorteilhaft dient der Ventilstift auch zur Führung der Schließfeder 42.

Die weitere Ausbildung des Druckregler 34 entspricht dem in der Fig. 1 dargestellten Druckregler 19. Für gleiche Bauteile wurden die in Fig. 1 verwendeten Bezugsziffern beibehalten.

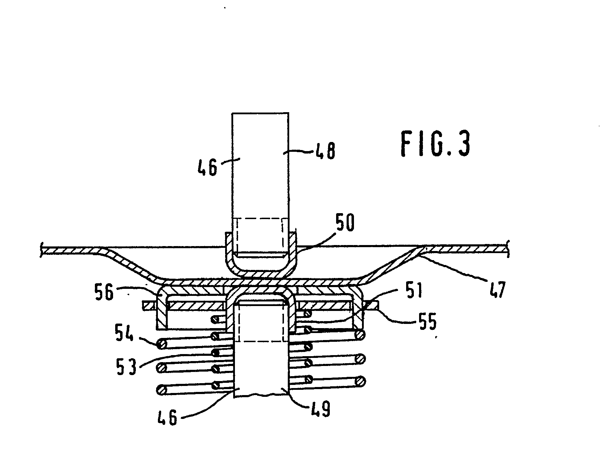

In der Fig. 3 ist schematisch eine unlösbare Verbindung zwischen einem Stellglied 46 und der Niederdruckmembran 47 dargestellt. Das Stellglied 47 ist aus zwei mit jeweils einem Befestigungsbolzen 48, 49 lösbar verbundenen Schweißhülsen 50, 51 gebildet, deren Querschnitt im wesentlichen dem Querschnitt der metallischen Niederdruckmembran entspricht. Mit einer Punktschweißverbindung werden die Schweißhülsen 50, 51 mit der metallischen Niederdruckmembran verbunden. Die Punktschweißverbindung kann vorteilhaft mit einem Energiestrahl erzeugt werden. Bei einem Druckregler für den Einsatz im Unterdruckbereich können der Befestigungsbolzen 48 und die Schweißhülse 50 entfallen. Die den Bauteilen der Fig. 1 und 2 entsprechende Feder ist mit 53, die Stellfeder mit 54, die Scheibe mit 55 und die Membranplatte mit 56 bezeichnet.

Ansprüche

1. Druckregler für Gase, insbesondere für Gase höchster Reinheit, mit einem im Druckreglergehäuse (13) angeordneten prozeßgasführenden Hochdruck- 14) und einem Niederdruckraum (15), welche über ein ansteuerbares, aus einem Ventilkörper (17) und einem Ventilsitz (16) bestehenden Ventil (21) miteinander verbindbar sind, mit einer im prozeßgasfreien Raum (23), vorzugsweise in einem Federgehäuse (1) angeordneten Stellfeder (9), die auf eine den Ventilkörper (17) steuernde und den Niederdruckraum (15) begrenzende Niederdruckmembran (11) wirkt und einer den Ventilkörper (17) gegen den Ventilsitz (16) stellenden Schließfeder,
dadurch gekennzeichnet,
daß im prozeßgasfreien Raum (23) an der Niederdruckmembran (11) mindestens ein Stellglied (24; 8,26;8, 35,48,50,49,51) befestigt ist , welches mit einer Feder (6,53) in Wirkverbindung steht.

2. Druckregler nach Anspruch 1,
dadurch gekennzeichnet,
daß das Stellglied (24; 8,26;8,35) durch eine Öffnung (57) in der Niederdruckmembran (11,47) geführt ist und den Niederdruckraum (15) mit dem prozeßgasfreien Raum (23) gasdicht verbindet.

3. Druckregler nach Anspruch 1,
dadurch gekennzeichnet,
daß das Stellglied (48,50,49,51) mit der Niederdruckmembran (11,47) unlösbar verbunden ist.

4. Druckregler nach einem der Ansprüche 1 bis 3,
dadurch gekennzeichnet,
daß das im prozeßgasfreien Raum (23) angeordnete Stellteil (8; 51,49) des Stellgliedes (24; 8,26; 8,35,48,50,49,51) in Stellrichtung (Pfeilrichtung 30) frei beweglich durch eine Öffnung (29) einer vorzugsweise an dem Federgehäuse (1) fest angeordneten Scheibe (2, 55) geführt ist, an welcher das eine Ende der Feder (6,53) anliegt, deren anderes Ende an einer am Stellteil (8; 49,51) angeordneten Schulter (31) eines Anlageelements (7) anliegt.

5. Druckregler nach einem der Ansprüche 1 bis 5,
dadurch gekennzeichnet,
daß der Abstand zwischen der Scheibe (2, 55) und dem Anlageelement (7) veränderbar ist.

6. Druckregler nach einem der Ansprüche 1 bis 5,
dadurch gekennzeichnet,
daß zwischen der Niederdruckmembran (11,47) und der Scheibe (2,55) eine Membranplatte (18,56) mit mindestens zwei im wesentlichen senkrechten Armen (3a, 3b) angeordnet ist und die Arme (3a, 3b) durch mindestens zwei Öffnungen (32,33) der Scheibe (2,55) geführt sind.

7. Druckregler nach einem der Ansprüche 1 bis 6,
dadurch gekennzeichnet,
daß auf den Armen (3a, 3b) eine Ringscheibe (4) angeordnet ist, an der das eine Ende der Stellfeder (9,54) anliegt, deren anderes Ende an einem Druckstück (12) eines Einstellelements (10) anliegt.

8. Druckregler nach einem der Ansprüche 1 bis 7,
dadurch gekennzeichnet,
daß die Membranplatte (18,56) eine Zentrumsöffnung (58) aufweist, durch welche das Stellteil (8; 49,51) in Stellrichtung (Pfeilrichtung 30) frei beweglich geführt ist.

9. Druckregler nach einem der Ansprüche 1, 2 oder 4 bis 8,
dadurch gekennzeichnet,
daß das Stellteil (8) einen zur Niederdruckmembran (11) gerichteten und an dieser anliegenden Dichtring (28) aufweist.

10. Druckregler nach Anspruch 8,
dadurch gekennzeichnet,
daß das Stellteil (8) mit einem in prozeßgasführenden Niederdruckraum (15) angeordneten Befestigungselement (26,35) verbunden ist, welches an seiner zur Niederdruckmembran (11) gerichteten Stirnseite mit einem dem Dichtring (28) des Stellteiles (8) gegenüberliegenden Dichtring (27) versehen ist.

11. Druckregler nach einem der Ansprüche 1 bis 10,
dadurch gekennzeichnet,
daß die Stellfeder (9,54) und die Feder (6,53) koaxial zueinander in einem Federgehäuse (1) angeordnet sind.

12. Druckregler nach einem der Ansprüche 1 bis 11,
dadurch gekennzeichnet,
daß die Feder (6,53) innerhalb des von der Stellfeder (9,54) umschlossenen Raumes angeordnet ist.

13. Druckregler nach einem der Ansprüche 1 bis 12,
dadurch gekennzeichnet,
daß das Befestigungselement (26,35,48,50) mit dem Ventilkörper (17) kraftschlüssig verbunden ist und die Feder (6,53) eine Schließfeder ist, welche den Ventilkörper (17) auf den Ventilsitz (16) zieht.

14. Druckregler nach einem der Ansprüche 1 bis 12,
dadurch gekennzeichnet,
daß der Niederdruckraum (15) an eine einen Unterdruck erzeugende Anlage (40) angeschlossen ist und mit der Feder (6) die Niederdruckmembran (11) entgegengesetzt zur Arbeitsrichtung spannbar ist.

FIG.1

FIG.2

FIG.3